# EUROPEAN PATENT APPLICATION

(11) **EP 2 760 003 A1**
(43) Date of publication of application: **30.07.2014**
(21) Application number: 13152558.6
(22) Date of filing: 24.01.2013
(51) Int. Cl.: G09B 23/28

(54) **Haptic user interface device for surgical simulation system**

(71) Applicant: Surgical Science Sweden AB, 413 14 Göteborg (SE)
(72) Inventor: Larsson, Anders, 412 55 Göteborg (SE); Johansson, Christer, 424 71 Olofstorp (SE); Nyström, Mattias, 412 65 Göteborg (SE)
(74) Representative: Edlund, Fabian

(57) **Abstract**

A haptic user interface device (1) for a surgical simulation system (2), comprising a frame (11) having a fixed base (12), a neck portion (15) rotatable around a first axis (A) in relation to the base (12), and a suspension portion (16) rotatable around a second axis (B) in relation to the neck portion (15), an instrument (10) having a rigid shaft (21) suspended by the suspension portion (16) so as to be pivotable around the first axis (A) and the second axis (B), a first and second actuator (14, 17) mounted on the frame (11) and arranged to provide force feedback to a user when rotating the instrument (10) around the first axis (A) and the second axis (B). The first and second actuators are mounted on the neck portion (15).

## Description

### Field of the invention

The present invention relates to a user interface device for a surgical simulation system, and in particular a user interface device for simulating a laparoscopic procedure.

### Background of the invention

In recent years, systems for surgical simulations have become increasingly more used, in order to train physicians various surgical procedures without putting live patients at risk. In particular in the field of minimally-invasive surgery, such as laparoscopy, endoscopy, colonoscopy, etc., such simulation systems have gained significant acceptance. During minimal-invasive surgery the physician typically relies on an image on a screen rather than on an actual view of the patient, and with powerful image rendering available today, such an image can be simulated with a very high degree of realism.

In order to interact with the simulation software, the simulation system further requires an input device, i.e. hardware which the physician may operate and which simulates an actual surgical instrument. Such input devices should in physical appearance and function resemble an actual instrument. However, they must also provide sensor for detecting the current position of the simulated instrument, thereby enabling the simulation software to provide an appropriate image on the screen. In addition, such devices preferably include haptic feedback, i.e. provide feedback of forces that would be encountered during an actual procedure.

In the case of laparoscopy, an example of a haptic input device is the Laparoscopic Surgical Workstation, (LSW) from Immersion Corp. This device includes a rigid shaft, corresponding to the instrument portion to be inserted into a patient, and a handle, with which the physician can move the instrument. In order to simulate the degrees of freedom of an actual instrument, which passes into a patient body through a small opening, the shaft is supported by a frame in a pivoting point with two degrees of freedom (rotation α, β). In addition, the shaft can be translated in linear motion along its longitudinal axis, i.e. in and out of a simulated body, as well as rotated around this longitudinal axis. The input device contains sensors for all degrees of freedom including rotation of the shaft, and actuators arranged to provide force feedback in all degrees of freedom. Force and motion is transferred between the actuators and the moving parts by means of wires.

A problem with the wires is that as the user moves the interface, the path that the wires follow changes, This causes stress in the wires, leading to excessive wear and the need for frequent replacement. Although wires in themselves are not expensive, the process of replacing the wires is complex and costly.

Relevant patent documents in this context are US 6,323,837 and US 6,902,405.

### General disclosure of the invention

It is an object of the present invention to address the shortcomings of the prior art, and to provide an improved user interface device which is robust in function and cost effective to manufacture. Another object is to provide a user interface device which in use provides the user with an experience more closely resembling that of an actual surgical instrument.

According to an embodiment of the invention, these and other objects are achieved by a haptic user interface device for a surgical simulation system comprising a frame having a fixed base, a neck portion rotatable around a first axis in relation to the base, and a suspension portion rotatable around a second axis in relation to the neck portion, which second axis is non-parallel to the first axis, and an instrument having a rigid shaft pivotably supported by the suspension portion. The device further has a first actuator mounted on the frame and arranged to provide force feedback to a user when rotating the instrument around the first axis, and a second actuator mounted on the frame and arranged to provide force feedback to a user when rotating the instrument around the second axis. The first and second actuators are mounted on a neck portion.

As two actuators are mounted on the neck portion and thus move with the neck portion around the first axis, the weight of these actuators can be arranged more symmetrically around the first axis. The interface device therefore provides a user with an improved sense of balance when rotating the instrument around the first axis.

The design according to this embodiment of the invention also allows orienting the motor along the neck portion, thus reducing the space requirements for the base.

Another advantage with having both actuators mounted on the neck portion is that electrical connections to both motors can be provided on the same part of the frame, i.e. the neck portion.

In order to transfer torque between the first motor and the base, and/or between the second motor and the suspension portion, flexible drive elements such as drive belts or wires may be used.

Further, as the second actuator, which is arranged to provide force feedback around the second axis, will rotate with the instrument around the first axis, the second motor will be oriented in a fixed relationship with the second axis. A flexible drive element, such as a drive belt or wire, extending between the second actuator and the suspension portion that moves around the second axis, will therefore run in a fixed path, i.e. will not be subject to torsion or twist. This improves the life time of the flexible drive element.

According to preferred embodiments, the rigid shaft is aso movable in relation to the suspension portion along a longitudinal axis of the rigid shaft. This provides the interface device with an additional degree of freedom, required in many types of simulations.

The rigid shaft can be fixed in relation to the suspension portion with respect to rotation around a longitudinal axis of the rigid shaft. Such a design may allow a less complex mechanical suspension of the rigid shaft. In this case, if rotation around the longitudinal axis is required by the simulation, such rotation may be provided by a handle of the instrument.

The rigid shaft may have a rack on one side, which rack engages a gear wheel on said frame, thereby transforming a linear motion of the shaft into a rotation of the gear wheel. This design can be an effective way to enable detection of the shaft position, as well as force feedback by an actuator connected to the gear wheel.

### Brief description of the drawings

The present invention will be described in more detail with reference to the appended drawings, showing currently preferred embodiments of the invention.
Figure 1 is a schematic view of a surgical simulation system with a user interface device according to an embodiment of the invention.
Figure 2 illustrates the degrees of freedom of the shaft of the instrument in figure 1.
Figure 3 is a schematic view of a surgical simulation system with a user interface device according to an embodiment of the invention.

### Detailed description of preferred embodiments

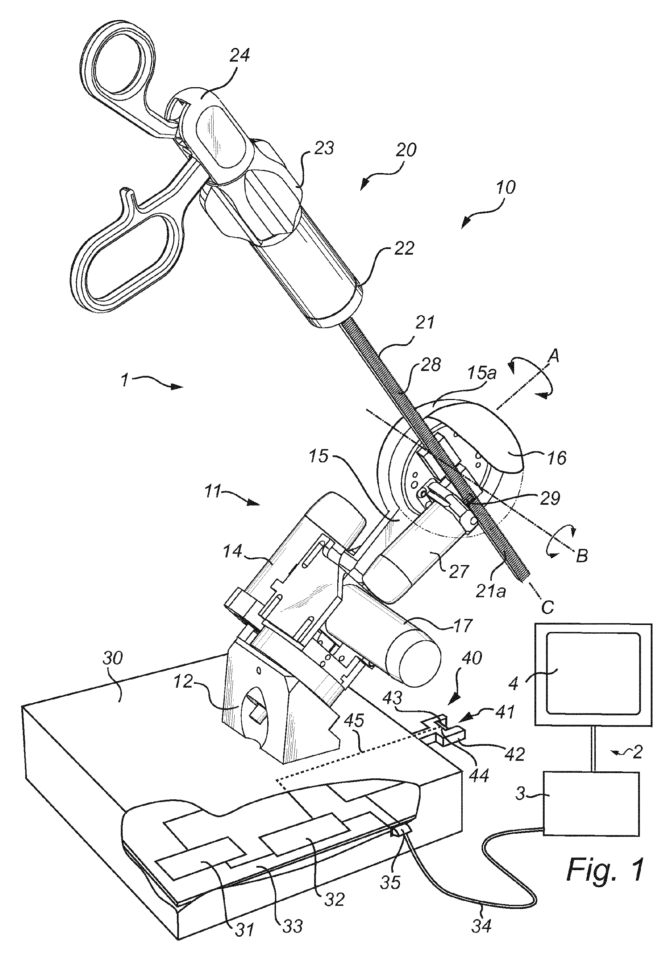

Figure 1 shows a user interface device 1 according to an embodiment of the present invention, schematically connected as part of a simulation system 2.

The simulation system 2 comprises a processing unit 3 running simulation software for simulating a surgical procedure, and a display 4 for displaying a visualization of the simulated procedure to a user. The interface device 1 is connected to the simulation system, and allows a user to provide input to the system 2, thereby interacting with the simulation visualized in the display device. The interface is haptic, i.e. it is adapted to provide a user with force feedback from the simulation in at least some of the degrees of freedom of the interface.

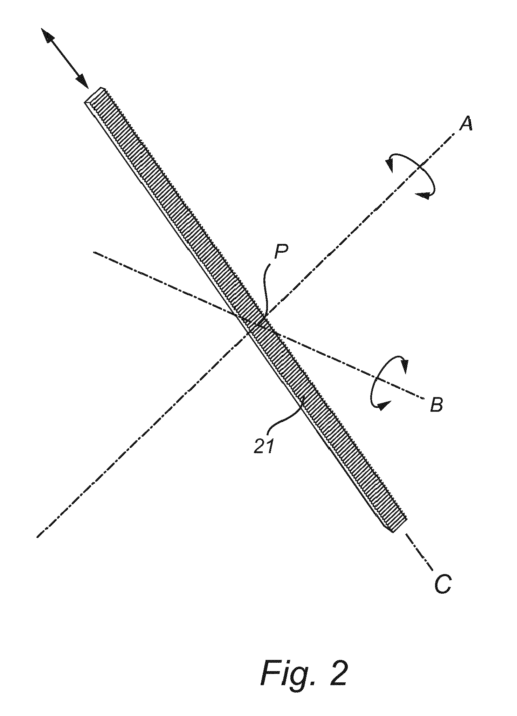

The user interface device 1 comprises a movable instrument 10 having a handle 20 and a rigid shaft 21 which is pivotably suspended by a frame 11. As indicated in figure 2, the frame 11 allows a pivoting motion of the shaft 21 around the pivoting point P, corresponding to the pivoting movement of an actual surgical instrument around the entry point into the body. In a surgical simulation interface device, this pivoting motion is typically mechanically divided into rotation around two different axis A and B, orthogonal to the longitudinal axis C of the shaft. In the illustrated case, the first axis A and second axis B are orthogonal to each other, but this is not an absolute requirement.

In addition, the frame 11 allows a translating motion of the shaft with respect to the frame, and optionally rotation of the shaft around its longitudinal axis C. As an alternative to such axial rotation of the shaft, the handle may be rotationally connected to the shaft, in order to provide this degree of freedom to the user.

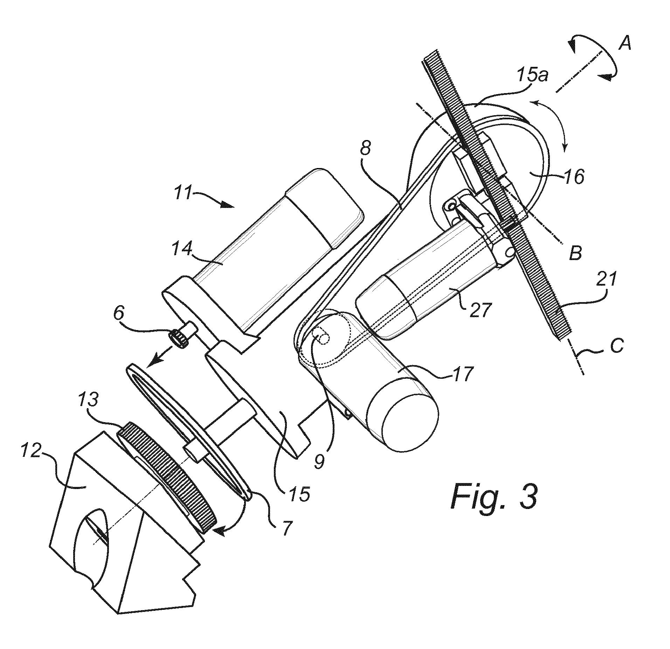

Figure 3 very schematically shows some parts of the user interface device 1 in figure 1, in order to illustrate the various degrees of freedom in the frame 11.

In the illustrated embodiment, rotation around the first axis A is provided by a neck portion 15 of the frame 11 being rotatably mounted to a stationary base 12. The upper part of the base comprises a torque transfer member, here a disc shaped portion 13 coaxially formed around the axis A. A first actuator, such as an electric motor 14, is fixedly mounted to the neck 15, and arranged to transfer a torque to the base 12 via disc 13. As illustrated schematically in figure 2, this can be accomplished by a driving belt 7 arranged around the member 13 and the motor axle 6. Preferably, the belt is a gear belt, and the member 13 has corresponding gears on its outer surface. By operation of the motor 14, force feedback can be provided for movement of the instrument around the axis A. It is noted that the motor 14, which is mounted to the frame 11, thus will move with the neck 15 around the axis A.

A rotation sensor (not shown) is provided to detect the position of the neck 15 in relation to the base 12. The sensor may advantageously be a rotational encoder integrated in the motor 14, and arranged to detect rotation of the motor axle 6.

Rotation around the second axis B is provided in a distal end 15a of the neck 15. A suspension portion 16 is mounted on the distal end 15a so as to be rotatable around axis B. The suspension portion 16 is arranged to suspend the shaft 21 of the instrument 10, and the details of this suspension will be discussed below. A second electric motor 17 is mounted on the neck 15, and is arranged to transfer a torque to the suspension portion 16. As illustrated schematically in figure 3, this can be accomplished by a driving belt 8 arranged around the portion 16 and the motor axle 9. By operation of the motor 17, force feedback can be provided for movement of the instrument 10 around the axis B. A rotation sensor (not shown) is provided to detect the position of the suspension portion 16 in relation to the distal end 15a of the neck 15. The sensor may advantageously be a rotational encoder integrated in the motor 17, and arranged to detect rotation of the motor axis 9.

Primarily with reference to figure 3, it is noted that the motor 17 is mounted on the neck 15, and thus will rotate together with the neck 15 and the suspension portion 16 around the axis A. The path of the drive belt 8 or drive wire loop extending between the axle 9 of the motor 17 and the suspension portion 16 will thus be fixed in space, and will not be subject to any twist or torsion. This significantly extends the life time of the belt 8 or wire.

It is also noted that this design also facilitates a rigid mechanical coupling between the motor 17 and suspension portion 16, such as a gear transmission.

The motors 14 and 17 are preferably of similar type and size, and mounted on opposite sides of the neck 15. The weight of the two motors 14 and 17 is preferably evenly balanced around the axis A, to provide a more balanced system, and an improved user experience.

In the following, the instrument 10 will be described with reference to figure 1. It is noted that the present invention is not limited to a specific type of instrument. On the contrary, the invention and its advantages are relevant for a variety of instruments having a rigid shaft arranged to pivot around a point..

The instrument disclosed in figure 1 comprises a handle 20 attached to the end of a rigid shaft 21. The handle 20 has a sensor body 22, fixedly connected to the shaft 21, and a rotator sleeve 23 and a grip portion 24. The instrument 10 in the present example is particular in that the rigid shaft does not rotate around its own longitudinal axis C. Instead, both the grip portion 24 and the rotator sleeve 23 rotatable around the longitudinal axis C of the shaft 21

Just as in an actual instrument, rotation of the sleeve 23 represents rotation of the instrument 10. Any rotation of the rotator sleeve 23 in relation to the sensor body will thus be detected by a sensor in the sensor body 22. The grip 24 and rotator sleeve 23 are coupled by a certain friction so that they are normally rotated together. However, a user may overcome the friction, to rotate the sleeve 23 and the grip 24 in relation to each other. Rotation of the grip 24 while the sleeve 23 is held fix merely represents an adjustment of the grip in relation to the instrument, and will not influence the simulated procedure. Rotation of the sleeve 23 in relation to the sensor body while the grip 24 is held fix, will however represent rotation of the instrument and will accordingly be detected by the sensor body.

The grip portion 24 allows the user to perform a gripping action using a scissor-like grip 25, and this action will also be detected by a sensor in the sensor body 22. A signal line 26 connects the sensor body 22 with the frame 11, in the illustrated example with the distal end 15a of the neck 15. The signal line 26 enables communication of sensor signals from the sensor body 22. The signal line is flexible, so as to allow movement of the instrument 10 in relation to the frame 11.

In the illustrated embodiment, the interface device 1 is not adapted to provide any force feedback associated with rotation of the instrument around axis C. It is noted that there are typically very limited forces acting on an actual instrument in this degree of freedom when operated inside a body. However, if such feedback is nevertheless desired, it may be accomplished by coupling a force to the rotation of the sleeve 23 relative the sensor body. As a simple example, a passive variable brake can be provided to the sleeve 23. Such a brake would introduce a resistance to turning the sleeve, and this resistance can be variable depending on the simulation. Of course, also active force feedback can be envisaged with a suitable actuator, such as an electric motor. It is however important that such actuator, if mounted on the handle, is not too heavy or bulky, as it could otherwise impact negatively on the user experience.

The rigid shaft 21 is mounted to the suspension portion 16 of the frame 11 so as to be movable along the longitudinal axis C. A third electric motor 27 is mounted to the suspension portion 16 to transfer a force along the axis C to the shaft 21. By operation of the motor 27, force feedback can thus be provided along the axis C. A sensor (not shown) is provided in the suspension portion 16 to detect linear motion of the shaft in relation to the portion 16. In the illustrated example, the shaft 21 is provided on one side with a rack 28 which engages a gearwheel 29 on the end of a motor shaft. Any linear motion of the shaft 21 will thus effectively be converted into rotational motion, to which a torque can be applied by the motor 27. Detection of the linear motion is also facilitated, and the sensor may be a rotational encoder integrated in the motor 17, and arranged to detect rotation of the motor axis

The base 12 of the frame 11 is mounted to a control unit 30, which includes drive circuitry 31 and communication interface 32, typically mounted on a printed circuit board 33. The control unit 30 can be incorporated in a working table (not shown). The interface 32 is connected to receive sensor signals from the various sensors in handle 10 and frame 11, and to communicate these signals to the simulation system 2. The interface 32 is further connected to receive force feedback signals from the simulation system 2, i.e. forces acting on the simulated instrument as a result of user actions. The drive circuitry 31 is connected to the interface 32, and arranged to drive the motors 14, 17 and 27 based on the force feedback signals from the simulation system. The interface 32 is here connected to the simulation system via a signal line 34 connecting a terminal 35 of the control unit 30 with the processing unit 3 of the simulation system. The connection may alternatively be wireless, e.g. Bluetooth or WiFi.

The interface device 1 further comprises a parking arrangement 40 to ensure that the instrument 10 is located in a predefined parking position 41. The arrangement 40 comprises a receptor 42 mounted in fixed relationship to the base 12 (here it is mounted on the control unit 30), and adapted to receive the distal end 21a of the rigid shaft 21. The receptor 42 preferably has such a shape that the shaft 21 is guided into a well defined position, where it is held in place by a suitable force. In the present example, the receptor 42 has a fork shape. The receptor 42 may have a magnet 43 to secure the shaft 21 in the parking position 41. Other designs of the receptor are equally possible,

The parking arrangement 40 further comprises an electrical switch 44, which provides an output signal indicative of that the shaft 21 is parked in the receptor 42. The switch 44 may be integrated with the magnet 43, if present, or may be a separate device. The switch 44 is connected to the interface 32 by a communication line 45, and the interface 32 is arranged to communicate the output signal to the simulation system 2.

The parking arrangement 40 will thus provide the simulation system 2 with a signal indicating that the instrument is in its parking position. By requiring that the instrument 10 is parked in this well-defined parking position before initiating a new simulation, automatic calibration of the simulation system is possible.

The person skilled in the art realizes that the present invention by no means is limited to the preferred embodiments described above. On the contrary, many modifications and variations are possible within the scope of the appended claims. For example, other types of sensors and encoders may be used, for detection of rotation as well as translation. For example, hall effect sensors or piezoelectric sensors. Further, the torque transmission from motors 14 and 17 may comprise suitable gear transmission instead of belt drive.

## Claims

1. A haptic user interface device (1) for a surgical simulation system (2), comprising:
a frame (11) having a fixed base (12), a neck portion (15) rotatable around a first axis (A) in relation to said base (12), and a suspension portion (16) rotatable around a second axis (B) in relation to said neck portion (15), sais second axis (B) being non-parallel to said first axis (A),
an instrument (10) having a rigid shaft (21) suspended by said suspension portion (16) so as to be pivotable around said first axis (A) and said second axis (B),
a first actuator (14) mounted on said frame (11) and arranged to provide force feedback to a user when rotating said instrument (10) around said first axis (A), and
a second actuator (14) mounted on said frame (11) and arranged to provide force feedback to a user when rotating said instrument (10) around said second axis (B),
**characterized in that**
said first and second actuators are mounted on said neck portion (15).

2. The user interface according to claim 1, further comprising a first flexible drive element (7) arranged to transfer a torque between said first motor (14) and said base (12) when said instrument is moved around the first axis (A).

3. The user interface according to claim 1 or 2, further comprising a second drive element (8) arranged to transfer a torque between said second motor (17) and said suspension portion (16) when said instrument is moved around the second axis (B).

4. The user interface according to any one of the preceding claims, wherein said rigid shaft (21) is movable in relation to said suspension portion (16) along a longitudinal axis of said rigid shaft (21).

5. The user interface according to any one of the preceding claims, further comprising a handle (20) allowing a user to operate said instrument (10), said handle (20) having a grip portion (24) rotatable around a longitudinal axis of said rigid shaft (21).

6. The user interface according to any one of the preceding claims, wherein said rigid shaft (21) is fixed in relation to said suspension portion (16) with respect to rotation around a longitudinal axis of said rigid shaft (21).

7. The user interface according to claim 6, wherein said rigid shaft (21) has a rack (28) on one side, said rack (28) engaging a gear wheel (29) on said frame (11), thereby transforming a linear motion of said shaft into a rotation of said gear wheel.

8. The user interface according to claim 7, further comprising an actuator (27) connected to said gear wheel (29) and arranged to provide force feedback to a user.

9. A surgical simulation system, comprising:
a processing unit (3) for executing simulation software for simulating a surgical procedure,
a display (4) for displaying a visualization of the simulated procedure,
a user interface device (1) according to any one of the preceding claims, connected to said processing unit (3) for allowing a user to interact with the computer simulation visualized in the display.
